# EUROPÄISCHE PATENTANMELDUNG

(11) **EP 0 714 857 A2**
(43) Veröffentlichungstag der Anmeldung: **05.06.1996**
(21) Anmeldenummer: 95118794.7
(22) Anmeldetag: 29.11.1995
(51) Int. Cl.: C02F 3/30, C02F 3/26

(54) **Verfahren zur biologischen Abwasserreinigung mit intermittierender Denitrifikation**

(30) Priorität: 02.12.1994 DE 4443019
(71) Anmelder: Linde Aktiengesellschaft, D-65189 Wiesbaden (DE)
(72) Erfinder: Habermeier, Bernard, Dipl.-Phys., D-82049 Pullach (DE); Blaschek, Reimut, Dipl.-Ing., D-82538 Geretsried (DE)
(74) Vertreter: Kasseckert, Rainer

(57) **Zusammenfassung**

Die Erfindung betrifft ein Verfahren zur biologischen Abwasserreinigung mit intermittierender Denitrifikation. Bei einem solchen Verfahren wird das Abwasser in zeitlicher Folge abwechselnd in einer Belüftungsphase mit Luft begast und in einer Denitrifikationsphase ohne Belüftung oder bei schwacher Belüftung gemischt. Um eine effektive Stickstoffentfernung aus dem Abwasser zu erreichen, wird vorgeschlagen, zumindest zu Beginn der Belüftungsphase ein sauerstoffhaltiges Gas mit einem gegenüber Luft erhöhten Sauerstoffgehalt in das Abwasser einzutragen. Hierfür kommt insbesondere technischer Sauerstoff in Frage.

## Beschreibung

Die Erfindung betrifft ein Verfahren zur biologischen Abwasserreinigung mit intermittierender Denitrifikation, wobei das Abwasser in zeitlicher Folge abwechselnd in einer Belüftungsphase mit Luft begast wird und in einer Denitrifikationsphase ohne Belüftung oder bei schwacher Belüftung gemischt wird.

Bei der biologischen Abwasserreinigung kommt es zunehmend darauf an, außer kohlenstoffhaltigen Substanzen auch Stickstoffverbindungen, die eine eutrophierende Wirkung auf Gewässer haben, aus dem Abwasser zu entfernen. Üblicherweise werden in einer aeroben Behandlungsstufe die kohlenstoffhaltigen Substanzen durch kohlenstoffverwertende Mikroorganismen im belebten Abwasserschlamm abgebaut und die Stickstoffverbindungen durch autotrophe Bakterien, sogenannte Nitrifikanten, in Nitrit und Nitrat umgewandelt. Um das gebildete Nitrit und Nitrat aus dem Abwasser zu entfernen, ist meist eine nachgeschaltete anoxische Behandlungsstufe vorgesehen, in der eine biologische Denitrifikation stattfindet. Dabei wird die Tatsache ausgenutzt, daß eine große Anzahl der Bakterien des belebten Schlammes in der Lage ist, anstelle von gelöstem Sauerstoff Nitrat als Sauerstoffquelle zu verwenden. Voraussetzung für die Denitrifikation ist ein Mangel oder besser noch die völlige Abwesenheit von gelöstem Sauerstoff.

Ein Wechsel zwischen aeroben und anoxischen Bedingungen in einem Belebungsbecken kann auch in zeitlicher Folge durch intermittierende Belüftung erreicht werden. So wird z.B. zunächst stärker belüftet, wobei nitrifiziert wird, während anschließend bei nur geringer Belüftungsintensität oder ausschließlicher Mischung ohne Belüftung vorwiegend denitrifiziert wird. Ein solches Belebungsverfahren mit intermittierender Denitrifikation ist beispielsweise im Lehr- und Handbuch der Abwassertechnik, Band IV, 1985, Ernst Verlag für Architektur und technische Wissenschaften, Seite 314, beschrieben.

Ein konventioneller Ausbau einer Kläranlage zur weitergehenden Abwasserreinigung unter Einschluß der Stickstoffelimination erfordert einen erheblichen baulichen Aufwand. Eine solche Maßnahme ist kostenintensiv und erfordert einen großen Platzbedarf. Andererseits konnten mit den bisherigen Verfahren zur intermittierenden Denitrifikation bislang keine befriedigenden Ergebnisse erzielt werden, wenn das Verfahren in konventionellen Kläranlagen auf intermittierende Denitrifikation umgestellt wurde.

Der vorliegenden Erfindung liegt daher die Aufgabe zugrunde, ein Verfahren der eingangs genannten Art so auszugestalten, daß auf wirtschaftliche Weise eine weitgehende Stickstoffelimination aus dem Abwasser erreicht wird.

Diese Aufgabe wird erfindungsgemäß dadurch gelöst, daß zumindest zu Beginn der Belüftungsphase ein sauerstoffhaltiges Gas mit einem gegenüber Luft erhöhten Sauerstoffgehalt in das Abwasser eingetragen wird.

Als sauerstoffhaltiges Gas wird bevorzugt technischer Sauerstoff verwendet, der üblicherweise einen Sauerstoffgehalt von weit über 90 Vol.-% aufweist. Es ist auch möglich, ein mit Sauerstoff hochangereichertes Gas oder sauerstoffangereicherte Luft einzusetzen. Von Bedeutung ist dabei, daß das sauerstoffhaltige Gas einen Sauerstoffgehalt aufweist, der deutlich über dem Sauerstoffgehalt von Luft liegt.

Ziel der vorliegenden Erfindung ist ein gezielter und optimaler Einsatz von technischem Sauerstoff oder einem mit Sauerstoff hochangereicherten Gas am Anfang der Belüftungsphase. Vorzugsweise wird das sauerstoffhaltige Gas zu Beginn der Belüftungsphase zusätzlich zur konventionellen Luftbegasung eingesetzt.

Das Wesentliche an der Erfindung ist, daß durch den technischen Sauerstoff oder das mit Sauerstoff hochangereicherte Gas die Sauerstoffkonzentration im Belebungsbecken innerhalb kürzester Zeit nach der Denitrifikationsphase auf einen für die Nitrifikation optimalen Wert angehoben wird. Wenn nach der kurzen Begasungszeit der gewünschte Sauerstoffgehalt im Belebungsbecken erreicht ist, wird die Zusatzbegasung wieder abgeschaltet. Dabei wird die Zusatzbegasung vorzugsweise automatisch in Abhängigkeit des Sauerstoffgehalts im Belebungsbecken gesteuert.

Bei einer konventionellen Luftbegasung ist diese Anlaufphase für den aeroben Abbau um ein vielfaches verlängert. Außerdem kann bei Belastungsstößen die erforderliche Sauerstoffkonzentration oftmals nicht mehr erreicht werden.

Mit dem Einsatz von technischem Sauerstoff beträgt diese Totzeit am Anfang lediglich 2 bis 5 Minuten je nach Frachtzulauf, bei konventioneller Belüftung beträgt diese Totzeit hingegen ca. 20 bis 30 Minuten.

Ein weiterer wesentlicher Unterschied zwischen dem erfindungsgemäßen Verfahren und dem Stand der Technik liegt in der Anzahl der Belüftungszyklen pro Tag. Da durch den Einsatz von technischem Sauerstoff am Anfang der Belüftungszyklen die Nitrifikation nahezu sofort einsetzt, kann die Zahl der Belüftungszyklen pro Tag wesentlich erhöht werden. Der Vorteil ist, daß sich die mittlere Ablaufkonzentration des gesamten Stickstoffgehalts dadurch noch erheblich reduzieren läßt, da diese umgekehrt proportional zur Anzahl der Belüftungszyklen ist.

Während die Zyklenzahl bei konventioneller Belüftung ca. 6 bis 7 pro Tag beträgt, kann sie bei Einsatz von technischem Sauerstoff am Anfang der Belüftungszyklen auf ca. 14 bis ca. 16 Zyklen pro Tag erhöht werden.

Das sauerstoffhaltige Gas sollte solange zu Beginn der Belüftungsphase in das Abwasser eingetragen werden, bis ein optimaler Sauerstoffgehalt des Abwassers für eine Nitrifikation erreicht ist. Es hat sich dabei als zweckmäßig erwiesen, das sauerstoffhaltige Gas in den ersten 2 bis 5 Minuten der Belüftungsphase in das Abwaser einzutragen. Diese Zeitspanne reicht im allgemeinen aus, um den für die Nitrifikation notwendigen Sauerstoffgehalt in der Anlaufphase im Abwasser sicherzustellen. Anschließend kann nach vorzugsweise automatischer Abschaltung der Zusatzbegasung der laufende Sauerstoffbedarf durch die weiterbetriebene konventionelle Luftbegasung gedeckt werden.

Je nach Beschaffenheit des zu behandelnden Abwassers kann es während des Betriebs der Abwasserbehandlungsanlage zu Belastungsstößen mit besonders hoher Schadstofffracht kommen. In diesen Fällen ist gemäß einer bevorzugten Ausführungsform der Erfindung vorgesehen, auch nach Beendigung der Anlaufphase für den aeroben Abbau sauerstoffhaltiges Gas mit einem Sauerstoffgehalt, der über dem von Luft liegt, zusätzlich zur konventionellen Belüftung in das Abwasser einzutragen. Auch diese Zusatzbegasung wird zweckmäßigerweise automatisch in Abhängigkeit vom Sauerstoffgehalt im Belebungsbecken gesteuert.

Der Erfindung zugrunde liegende Untersuchungen haben außerdem ergeben, daß es zweckmäßig ist, die Belüftungsphase auf eine Belüftungszeit von insgesamt ca. 50 bis ca. 70 Minuten, vorzugsweise ca. 60 Minuten, und die Denitrifikationsphase auf eine unbelüftete Behandlungsdauer von ca. 20 bis ca. 40 Minuten, vorzugsweise ca. 30 Minuten, einzustellen. Auf diese Weise können pro Tag ca. 14 bis ca. 16 Belüftungsphasen durchgeführt werden.

Durch die zusätzliche Begasung mit Sauerstoff oder einem mit Sauerstoff hochangereicherten Gas in der Anfangsphase der Nitrifikation wird eine ganze Reihe von Vorteilen erzielt:
Die Leistung der Anlage bezüglich der Stickstoffelimination kann beträchtlich zwischen 60 und 90 % je nach Abwasserzusammensetzung ohne Ausbaumaßnahmen erhöht werden. Darüberhinaus können die vom Gesetzgeber geforderten Mindestanforderungen bezüglich der NH₄-N- und der N_{ges.}-Ablaufwerte unterschritten werden, was eine erhebliche Einsparung bei den Abwasserabgaben bedeutet. Zudem verbessert sich der Kohlenstoffabbau. Ferner kann das vorhandene Belebungsbeckenvolumen optimal ausgenutzt werden. Sehr kostenintensive bauliche Erweiterungen zur Stickstoffelimination und die damit verbundenen Schwierigkeiten und Unsicherheiten bei Baugenehmigungsverfahren entfallen. Ein weiterer wesentlicher Vorteil besteht darin, daß keine wilde Denitrifikation in der Nachklärung auftreten kann, so daß keine Probleme mit Schwimmschlamm oder Schlammabtrieb entstehen, die zu teilweise schlechten Ablaufwerten führen. Schließlich werden durch das erfindungsgemäße Verfahren ein verbessertes Schlammabsetzverhalten und eine Erhöhung der Phosphorelimination erreicht.

Ein Einsatz des erfindungsgemäßen Verfahrens ist überall dort möglich, wo Abwässer biologisch gereinigt werden und der Sauerstoffgehalt möglichst schnell erhöht werden soll.

Das Verfahren kann in konventionellen Belebungsbecken mit nachgeschalteter Nachklärung durchgeführt werden, wobei im Belebungsbecken vorhandener freier Belebtschlamm die für den Schadstoffabbau verantwortlichen Mikroorganismen enthält. Der Belebtschlamm wird in der Nachklärung vom gereinigten Abwasser abgetrennt und in das Belebungsbecken zurückgeführt, während das gereinigte Abwasser abgeführt wird.

Es kann aber auch das Prinzip der sogenannten trägergebundenen Biologie angewandt werden. Dabei ist die Biomasse auf Trägerteilchen angesiedelt, die im Abwasser schweben. Zum Zurückhalten der Trägerteilchen ist am Ablauf des Belebungsbeckens ein Sieb angeordnet. Zusätzlich zur gebundenen Biomasse kann auch noch freier Belebtschlamm im Belebungsbecken vorhanden sein, der über eine Nachklärung vom gereinigten Abwasser abgetrennt und in das Belebungsbecken zurückgeführt wird.

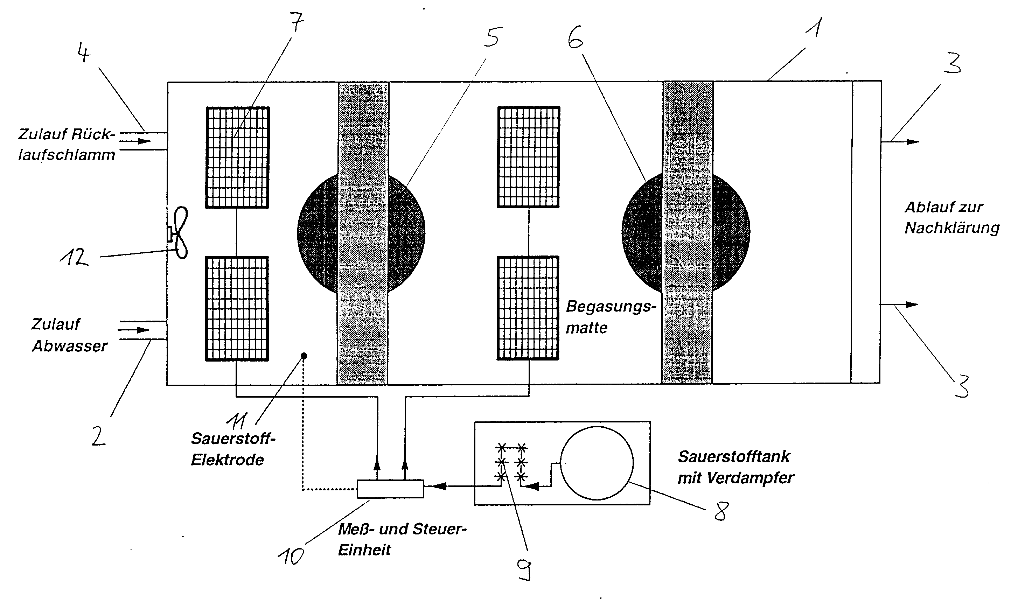

Im folgenden soll die Erfindung anhand eines in der Figur schematisch dargestellten Ausführungbeispiels näher erläutert werden.

Die Figur zeigt ein Belebungsbecken 1 mit einem Abwasserzulauf 2 und einem Abwasserablauf 3. Das behandelte Abwasser wird einer dem Belebungsbecken 1 nachgeschalteten und in der Figur nicht dargestellten Nachklärung zugeführt, wo das gereinigte Abwasser vom Belebtschlamm abgetrennt wird. Während das gereinigte Abwasser abgezogen wird, wird der Belebtschlamm über Schlammzuleitung 4 wieder in das Belebungsbecken 1 zurückgeführt.

Im Belebungsbecken 1 sind zwei Kreiselbelüfter 5 und 6 angeordnet, die während der Belüftungsphasen Umgebungsluft in das im Belebungsbecken 1 befindliche Abwasser-Belebtschlamm-Gemisch eintragen. Zusätzlich sind Begasungsmatten 7 auf dem Boden des Belebungsbeckens 1 installiert, über die zu Beginn der Belüftungsphasen technischer Sauerstoff in das Abwasser-Belebtschlamm-Gemisch eingetragen wird. Der technische Sauerstoff wird in einem Flüssig-Sauerstoff-Tank 8 gelagert und über einen Verdampfer 9 sowie eine Meß- und Steuereinheit 10 zu den Begasungsmatten 7 geleitet. Mittels einer im Belebungsbecken 1 angeordneten Sauerstoffelektrode 11 wird der Sauerstoffgehalt im Abwasser-Belebtschlamm-Gemisch gemessen. Dieser Meßwert wird zur Steuerung der Sauerstoffbegasung eingesetzt.

Beim Betrieb dieser Abwasserbehandlungsanlage werden in zeitlicher Folge abwechselnd Belüftungsphasen und Denitrifikationsphasen durchlaufen. Dies wird durch eine intermittierende Belüftung des Belebungsbeckens 1 mittels der Kreiselbelüfter 5 und 6 erreicht. In den Belüftungsphasen wird das Abwasser-Belebtschlamm-Gemisch stark belüftet, während in den Denitrifikationsphasen die Belüftung abgeschaltet wird und nur noch eine Durchmischung des Abwasser-Belebtschlamm-Gemisches mit einem zusätzlichen Tauchmotorrührwerk 12 stattfindet.

Um eine Verkürzung der Anlaufphase der biologischen Nitrifikation nach Beendigung der Denitrifikationsphase zu erreichen, wird zu Beginn der Belüftungsphase zusätzlich zur konventionellen Luftbegasung über die Kreiselbelüfter 5 und 6 technischer Sauerstoff über die Begasungsmatten 7 in das Abwasser-Belebtschlamm-Gemisch eingetragen. Auf diese Weise wird die Sauerstoffkonzentration im Belebungsbecken innerhalb kürzester Zeit nach der Denitrifikationsphase auf einen für die Nitrifikation optimalen Wert angehoben.

Nach Erreichen eines vorgegebenen Sauerstoffgehalts im Belebungsbecken wird die Sauerstoffbegasung mittels der Meß- und Steuereinheit 10 automatisch abgeschaltet, während die Belüftung mittels der Kreiselbelüfter 5 und 6 fortgesetzt wird. Üblicherweise reicht eine Sauerstoffbegasung während der ersten 2 bis 5 Minuten der Belüftungsphase aus, um den gewünschten Sauerstoffgehalt im Abwasser-Belebtschlamm-Gemisch zu erreichen. Die Belüftung mittels der Kreiselbelüfter 5 und 6 wird noch solange fortgesetzt, bis sich insgesamt eine Belüftungszeit von ca. 60 Minuten ergibt.

Dann werden auch die Kreiselbelüfter 5 und 6 abgeschaltet und es wird die Denitrifikationsphase eingeleitet. Während der Denitrifikationsphase wird das Abwasser-Belebtschlamm-Gemisch ohne jede Sauerstoffzufuhr gemischt, um eine weitgehende biologische Denitrifikation des Abwassers unter anoxischen Bedingungen zu gewährleisten. Die Denitrifikationsphase dauert ca. 30 Minuten.

Anschließend wird wieder mit der Belüftungsphase begonnen.

Auf diese Weise werden ca. 14 bis 16 Belüftungszyklen pro Tag durchgeführt.

## Patentansprüche

1. Verfahren zur biologischen Abwasserreinigung mit intermittierender Denitrifikation, wobei das Abwasser in zeitlicher Folge abwechselnd in einer Belüftungsphase mit Luft begast wird, und in einer Denitrifikationsphase ohne Belüftung oder bei schwacher Belüftung gemischt wird, **dadurch gekennzeichnet, daß** zumindest zu Beginn der Belüftungsphase ein sauerstoffhaltiges Gas mit einem gegenüber Luft erhöhten Sauerstoffgehalt in das Abwasser eingetragen wird.

2. Verfahren nach Anspruch 1, dadurch gekennzeichnet, daß als sauerstoffhaltiges Gas technischer Sauerstoff verwendet wird.

3. Verfahren nach Anspruch 1 oder 2, dadurch gekennzeichnet, daß das sauerstoffhaltige Gas solange zu Beginn der Belüftungsphase in das Abwasser eingetragen wird, bis ein für eine Nitrifikation des Abwassers optimaler Sauerstoffgehalt des Abwassers erreicht ist.

4. Verfahren nach einem der Ansprüche 1 bis 3, dadurch gekennzeichnet, daß das sauerstoffhaltige Gas in den ersten 2 bis 5 Minuten der Belüftungsphase in das Abwasser eingetragen wird.

5. Verfahren nach einem der Ansprüche 1 bis 4, dadurch gekennzeichnet, daß das sauerstoffhaltige Gas zusätzlich bei Belastungsstößen des Abwassers mit erhöhtem Sauerstoffbedarf in das Abwasser eingetragen wird.

6. Verfahren nach einem der Ansprüche 1 bis 5, dadurch gekennzeichnet, daß die Belüftungsphase auf eine Belüftungszeit von ca. 50 bis ca. 70 Minuten, vorzugsweise ca. 60 Minuten, eingestellt wird.

7. Verfahren nach einem der Ansprüche 1 bis 6, dadurch gekennzeichnet, daß die Denitrifikationsphase auf eine unbelüftete Behandlungsdauer von ca. 20 bis ca. 40 Minuten, vorzugsweise ca. 30 Minuten, eingestellt wird.

8. Verfahren nach einem der Ansprüche 1 bis 7, dadurch gekennzeichnet, daß ca. 14 bis ca. 16 Belüftungsphasen pro Tag durchgeführt werden.
